# EUROPÄISCHE PATENTANMELDUNG

(11) **EP 3 757 084 A1**
(43) Veröffentlichungstag der Anmeldung: **30.12.2020**
(21) Anmeldenummer: 20182930.6
(22) Anmeldetag: 29.06.2020
(51) Int. Cl.: C07B 37/04, C07B 61/00

(54) **MECHANOCHEMISCHES SYNTHESEVERFAHREN UNTER VERWENDUNG EINES KATALYTISCH AKTIVEN FORMKÖRPERS**

(30) Priorität: 27.06.2019 DE 102019117437
(71) Anmelder: Ruhr-Universität Bochum, 44801 Bochum (DE)
(72) Erfinder: Borchardt, Lars, 44789 Bochum (DE); Grätz, Sven, 58455 Witten (DE); Vogt, Christian, 01277 Dresden (DE)
(74) Vertreter: Gruner, Leopold Joachim

(57) **Zusammenfassung**

Die vorliegende Erfindung betrifft ein mechanochemisches Verfahren zur direkten heterogenen Katalyse einer chemischen Reaktion, umfassend die folgenden Schritte, (a) Bereitstellen zumindest eines Edukts; (b) Bereitstellen eines Formkörpers, wobei der Formkörper zumindest ein katalytisch aktives Material umfasst; und (c) direktes mechanochemisches Umsetzen des zumindest einen Edukts zu einem Produkt durch energieübertragendes Inkontaktbringen dieser mit dem Formkörper; wobei der Feststoffanteil in der heterogen katalysierten chemischen Reaktion mehr als 30 Gew.-% beträgt, und wobei das katalytisch aktive Material ein Kompressionsmodul von zumindest 160 GPa und eine Mohshärte von zumindest 3,0 aufweist., und die Verwendung eines katalytisch aktiven Formkörpers in dieser chemischen Reaktion.

## Beschreibung

### Technisches Gebiet

Die vorliegende Erfindung betrifft ein mechanochemisches Verfahren zur direkten heterogenen Katalyse einer chemischen Reaktion, einen katalytisch aktiven Formkörper, und die Verwendung eines katalytisch aktiven Formkörpers in dieser chemischen Reaktion.

### Stand der Technik

Etwa 90% aller chemischen Produktionsprozesse laufen heutzutage katalysiert ab. Katalyse erlaubt es, Rohstoffe entweder überhaupt erst oder auf ökonomisch effizientere und ökologisch verträglichere Art und Weise zu wertvollen Chemikalien und Brennstoffen zu verarbeiten. Sie ist somit von entscheidender Bedeutung für eine Vielzahl chemischer Prozesse, beispielsweise in der Lebensmittel-, Automobil-, chemischen, petrochemischen und pharmazeutischen Industrie. Sowohl in der heterogenen als auch der homogenen Katalyse wird ein Katalysator dem Reaktionsgemisch hinzugegeben und muss nach der Reaktion von diesem wieder abgetrennt werden. Bei der klassischen heterogenen Katalyse wird ein festes Katalysatorbett von einem Gas durchströmt, wobei aus einem gasförmigen Edukt ein gasförmiges Produkt gebildet wird. Die Reaktion selbst läuft zumeist in Reaktoren ab, die thermisch beheizt werden. Dieses Heizen ist notwendig, um die Aktivierungsenergie der chemischen Reaktion zu überwinden.

Bei einer homogenen Katalyse müssen allerdings sowohl die Reaktanden als auch der Katalysator in einem Solvens löslich sein. Im Anschluss an die chemische Umsetzung muss der Katalysator aufwendig vom Reaktionsgemisch abgetrennt werden.

Vor allem heterogene Katalysatoren spielen daher eine dominante Rolle, da diese leicht von den meisten fluiden Reaktionsprodukten abtrennbar sind. Entsprechend der zur Überwindung der Aktivierungsenergie verwendeten Energiequelle wird zwischen Thermo-, Elektro- und Fotokatalyse unterschieden. In den letzten Jahren gewinnt jedoch auch die Mechanokatalyse zunehmend an Bedeutung. Hierbei wird Energie lokal begrenzt in das System eingebracht (z.B. am Stoßquerschnitt der Kugeln in Kugelmühlen), wodurch punktuell extreme Drücke und Temperaturen erzeugt und Produkte zugänglich gemacht werden, welche auf klassischem Weg nicht synthetisiert werden können. Bisher wurde in der Mechanokatalyse dem Reaktionsgemisch der Katalysator als zusätzliche Feststoffphase zugesetzt (indirekte Mechanokatalyse) und die Mühle ausschließlich zum Energieeintrag verwendet. Indirekte Mechanokatalyse bedeutet hierbei, dass der Katalysator als zusätzliches Pulver zugesetzt wird [Hernández et al.; Tetrahedron Letters, 56(29), 15.7.2015, 4253-4265].

WO 2007/023295 A2 beschreibt eines der ersten mechanokatalytischen Verfahren zur Herstellung von metallorganischen Verbindungen. Dafür werden die Ausgangsverbindungen (d.h. Edukte) zusammen mit Katalysatoren in eine Mahlvorrichtung (z.B. einer Mühle), die eine inerter Oberfläche aufweist, gegeben und durch vermahlen miteinander polymerisiert.

Darüber hinaus wird beispielsweise in US 9,206,098 B2 die Herstellung organischer Verbindungen in einem mechanokatalytischen Verfahren mit metallbasierten Katalysatoren vorgeschlagen. Im konkreten Fall wird vorbehandelte Zellulose zu Zuckeralkoholen verarbeitet. Dabei wird wie in der WO 2007/023295 A2 der Katalysator in Form eines trockenen Pulvers den Ausgangsverbindungen zugesetzt.

Die vorgenannten Verfahren haben den Nachteil, dass die (innere) Oberflächen der Mahlvorrichtung nicht direkt an der Reaktion beteiligt sind, sodass stets ein Katalysator zugesetzt werden muss. Dieser muss nach der chemischen Umsetzung der Edukte aufwendig vom Produkt abgetrennt und aufgereinigt werden.

Bei dem in der US 9,701,542 B2 beschriebenen Verfahren handelt es sich um eine anorganische Mechanokatalyse, bei der hexagonales Osmiumborid in einer Kugelmühle hergestellt wird. Hierbei wird kein zusätzlicher Katalysator zugegeben, der im Anschluss an die chemische Umsetzung auch nicht abgetrennt oder abgeschieden werden muss. Die chemische Umsetzung basiert dabei auf der Reaktionsfreudigkeit der anorganischen Ausgangsverbindungen und kann daher nicht auf die Knüpfung organischer Verbindungen übertragen werden. Die Wandung (d.h. die Oberfläche) der Mahlvorrichtung ist dabei für die Reaktion irrelevant so lange diese eine ausreichende Härte aufweist.

Weiterhin ist in Fulmer et al. (Green Chemistry 2009, 11(11):1821; DOI: 10.1039/B915669K) ein Verfahren beschrieben in denen die Mahlkugeln die Rolle des Co-Katalysators in einer Sonogashira-Reaktion übernehmen. In diesem Fall wurden Mahlkugeln und Mahlgefäß (Becher) aus Kupfer eingesetzt die das sonst übliche Kupfer(I)iodid ersetzten und den eigentlichen Palladiumkatalysator (Pd(PPh₃)₄) regenerieren.

In einem anderen Verfahren von Cook et al. (Green Chemistry 15(3):617-619; 10.1039/C3GC36720G), werden dieselben Kupfer-Becher und Mahlkugeln wie bei Fulmer *et al.* (2009) in der Katalyse einer Klick-Reaktion verwendet, bei der Alkine mit Aziden gekoppelt werden. Dieses katalytische Verfahren hat allerdings den Nachteil, dass das Kupfer aufgrund seiner geringen Härte (Mohshärte 3,0), geringen Festigkeit (320 MPa) und dem geringen Kompressionsmoduls (138 GPa) nur ein sehr geringer Energieeintrag in die Reaktion erfolgen kann und zudem der Metallabrieb und der damit verbundene Eintrag von partikulärem Kupfer in das Reaktionsgemisch sehr hoch ist. Aufgrund des hohen Metallabriebs ist hier nachteilig ein nachgeschaltetes, aufwendiges Abtrennungsverfahren erforderlich. Zudem muss die Mehrzahl der darin eingesetzten Edukte in Form von Flüssigkeiten vorliegen.

### Aufgabe

Der vorliegenden Erfindung liegt daher die technische Aufgabe zugrunde, ein Verfahren bereitzustellen, bei dem nach der chemischen Umsetzung der Edukte auf ein aufwendiges Abtrennen und Aufreinigen des Katalysators vom Produkt verzichtet werden kann.

Zudem ist es Aufgabe der vorliegenden Erfindung, ein Verfahren bereitzustellen, mit dem auch feste (solide) Ausgangsstoffe direkt umgesetzt werden können, ohne diese erst in einem dafür geeigneten Lösungsmittel oder einem flüssigen Reaktionspartner lösen zu müssen.

### Lösung

Erfindungsgemäß wird diese Aufgabe durch ein mechanochemisches Verfahren zum direkten heterogenen Katalysieren einer chemischen Reaktion gemäß Anspruch 1 gelöst.

Weitere vorteilhafte Ausgestaltungen sind in den Unteransprüchen angegeben.

Das erfindungsgemäße mechanochemische Verfahren zum direkten heterogenen Katalysieren einer chemischen Reaktion, umfasst dabei die folgenden Schritte:
a) Bereitstellen zumindest eines Edukts;
b) Bereitstellen eines Formkörpers, wobei der Formkörper zumindest ein katalytisch aktives Material (d.h. Aktivkomponente) umfasst; und
c) direktes mechanochemisches Umsetzen des zumindest einen Edukts zu einem Produkt durch energieübertragendes Inkontaktbringen, insbesondere wiederholtes energieübertragendes Inkontaktbringen dieser Edukte mit dem Formkörper;
wobei zumindest eines der Edukte in der heterogen katalysierten chemischen Reaktion als Feststoff eingesetzt wird.

Bevorzugt beträgt der Feststoffanteil aller Komponenten - Edukte (d.h. Reaktanden bzw. einer zweiten Aktivkomponente) und Inertmaterialien - in (bzw. während) der heterogen katalysierten chemischen Reaktion mehr als 30 Gew.-%.

Vorzugsweise weist das hierin eingesetzte katalytisch aktive Material ein Kompressionsmodul von zumindest 160 GPa und eine Mohshärte von zumindest 3,0 auf.

### Allgemeine Vorteile

Da es sich bei der erfindungsgemäßen direkten Mechanokatalyse (d.h. mechanochemischen Verfahren zum direkten heterogenen Katalysieren einer chemischen Reaktion) um eine Feststoffreaktion handelt, ist der Zusatz eines Lösungsmittels oder die Löslichkeit der Edukte und/oder Produkte in einem dafür geeigneten Lösungsmittel vorteilhaft nicht mehr von Bedeutung. Folglich sind auch chemische Reaktionen und Verbindungen zugänglich, die bisher in lösungsmittelbasierten Reaktionen nicht umsetzbar bzw. herstellbar waren.

Darüber hinaus wird die Anhäufung unnötiger Abfälle durch das (lösungsmittelfreie) mechanochemische Verfahren reduziert. Dies stellt einen ernsthaften ökologischen und ökonomischen Vorteil gegenüber konventionellen Verfahren dar, da Abfall nicht gesondert entsorgt werden muss, was zeit-, kosten- und energieersparend (insbesondere für die großtechnische oder industrielle Anwendung) ist.

Zudem müssen die eingesetzten Katalysatoren (homogen und/oder heterogen) nach erfolgter chemischer Umsetzung (Reaktion) vorteilhaft nicht erst aufwendig vom Reaktionsgemisch abgetrennt werden, sondern können auf Grund der Größe der Formkörper einfach vom Reaktionsgemisch abgetrennt werden.

Darüber hinaus erlaubt es das erfindungsgemäße Verfahren besonders vorteilhaft, dass zur direkten heterogenen Katalyse einer chemischen Reaktion, wie z.B. der Knüpfung organischer Bindungen wie zum Beispiel Polymerisierungsprozesse rein mechanische Energie verwendet wird und somit die Reaktion bei milden Reaktionsbedingungen durchgeführt werden kann.

Die Erfinder der vorliegenden Erfindung haben zudem herausgefunden, dass die mechanochemisch katalysierten Reaktionen zumeist schneller ablaufen als bei vergleichbaren klassisch-chemischen Verfahren, wodurch der Zeit- und Energieaufwand verringert wird.

In einer besonders bevorzugten Ausgestaltung der vorliegenden Erfindung wird das Verfahren zum direkten heterogenen Katalysieren einer chemischen Reaktion als Festphasenreaktion durchgeführt. Der Begriff "Festphasenreaktion" bedeutet hierin, dass der Reaktion alle Edukte als Feststoffe zugesetzt werden. Vorteilhaft kann dadurch auf den Zusatz eines Lösungsmittels vollständig verzichtet werden, wodurch einerseits auf das Abtrennen des Produktes von einem bzw. dem Lösungsmittel verzichtet werden kann und zudem auf eine Aufreinigung des Lösungsmittels nach der chemischen Umsetzung der Edukte (d.h. Reaktion) verzichtet werden kann.

Nach einer bevorzugten Ausgestaltung beträgt der Feststoffanteil aller Komponenten - Edukte (Reaktanden bzw. zweite Aktivkomponenten) und Inertmaterial - in (bzw. während) der heterogen katalysierten chemischen Reaktion zumindest mehr als 30 Gew.-%, bevorzugt zumindest 50 Gew.-%, ganz besonders bevorzugt zumindest 65 Gew.-%, noch weiter bevorzugt zumindest 80 Gew.-%, wie 81 Gew.-%, 82 Gew.-%, 83 Gew.-%, 84 Gew.-%, 85 Gew.-%, 86 Gew.-%, 87 Gew.-%, 88 Gew.-%, 89 Gew.-%, 90 Gew.-%, wie 91 Gew.-%, 92 Gew.-%, 93 Gew.-%, 94 Gew.-%, 95 Gew.-%, 96 Gew.-%, 97 Gew.-%, 98 Gew.-%, 99 Gew.-% bemessen an allen Komponenten des Reaktionsgemisches. Dies bedeutet, dass ein Großteil oder sogar die Mehrzahl der für die chemische Reaktion bereitgestellten Komponenten, d.h. der direkt an der Reaktion beteiligte Edukte und ggf. zugesetztes Inertmaterial, ausgenommen des Formkörpers unter den gegebenen Reaktionsbedingungen ein Feststoff ist. Dabei werden die Edukte, in Form als (ggf. poröses) Pulver oder Granulat zugesetzt

So kann dem Reaktionsgemisch, beispielsweise bei Reaktionen die Basen- bzw. Säurekatalysiert ablaufen, ein hoher Anteil von vorzugsweise zumindest 30 Gew.-%, bevorzugt zumindest 50 Gew.-% (d.h. im Überschuss), ganz besonders bevorzugt zumindest 65 Gew.-%, noch weiter bevorzugt zumindest 80 Gew.-% bemessen an allen Komponenten des Reaktionsgemisches zumindest eine zweite Aktivkomponente als weiteres an der Reaktion beteiligtes Edukt (z.B. Basen, Säuren) zugesetzt, die unter den gegebenen Reaktionsbedingungen ein Feststoff ist und somit ebenfalls als Bulk-Material dient. So werden beispielsweise bei Kupplungsreaktionen (Erd-)Alkalimetallcarbonate (z.B. Na₂CO₃, K₂CO₃, CaCO₃) oder (Erd-)Alkalimetallhydroxide (z.B. NaOH) als Basen in Form als Feststoffe zugesetzt. Der Zusatz des hohen Anteils einer festen zweiten Aktivkomponente ist insbesondere dann von Vorteil, wenn die Mehrzahl der Edukte unter den gegebenen Reaktionsbedingungen Flüssigkeiten ist. Entgegen dem Formkörper bzw. dem katalytisch aktiven Material dient die zweite Aktivkomponente ebenfalls als Bulk-Material und wird dem Reaktionsgemisch daher bevorzugt in Form als (ggf. poröses) Pulver oder Granulat zugesetzt. Es kann dabei vorgesehen sein, dass die zweite Aktivkomponente im Verhältnis zu den anderen Edukten in der vorliegenden Reaktion zumindest im Überschuss, wie bspw. im 2-fachen, 3-fachen, 4-fachen, 5-fachen oder 6-fachen Überschutz zugesetzt ist.

Um den hohen Anteil an Feststoffkomponenten während der mechanochemisch katalysierten Reaktion zu gewährleisten (bspw. wenn die Mehrzahl der Edukte unter den gegebenen Reaktionsbedingungen Flüssigkeiten sind), kann dem Reaktionsgemisch alternativ bevorzugt auch ein festes Inertmaterial bzw. ein inerter Feststoff (d.h. ein Zusatzstoff, der nicht direkt an der Reaktion teilnimmt) mit einem hohen Anteil von vorzugsweise zumindest 30 Gew.-%, bevorzugt zumindest 50 Gew.-% (d.h. im Überschuss), ganz besonders bevorzugt zumindest 65 Gew.-%, noch weiter bevorzugt zumindest 80 Gew.-% bemessen an allen Komponenten des Reaktionsgemisches zugesetzt sein. Als feste Inertmaterialien eignen sich beispielsweise (Erd-)Alkalimetallhalogenide (z.B. NaCl, KCl, CaCl₂, BaCl₂), inerte Metalloxide (z.B. BeO, MgO, TiO₂, ZrO₂, ZnO, Al₂O₃, SiO₂), Mischoxidkeramiken wie ATZ/ZTA, Aluminiumnitrid (AIN), Siliciumcarbid (SiC), Siliziumnitrid (Si₃N₄), Wolframcarbid (WC), Borcarbid (B₄C), kubisches Bornitrid (c-BN) oder Grafit. Das Inertmaterial dient somit ausschließlich als Bulk-Material, und wird dem Reaktionsgemisch daher bevorzugt in Form als (ggf. poröses) Pulver oder Granulat zugesetzt. Es kann dabei vorgesehen sein, dass das feste Inertmaterial im Verhältnis zu den in der vorliegenden Reaktion zumindest im Überschuss, wie bspw. im 2-fachen, 3-fachen, 4-fachen, 5-fachen oder 6-fachen Überschutz zugesetzt ist.

Bevorzugt wird der zugesetzte Anteil der festen zweiten Aktivkomponente bzw. des inerten Feststoffs so gewählt, dass der Gesamtanteil an Feststoffen, d.h. aller an der Reaktion beteiligten Komponenten (Edukte (Reaktanden bzw. zweite Aktivkomponenten) und das Inertmaterial vor Beginn der chemischen Reaktion mehr als 30 Gew.-%, bevorzugt zumindest 50 Gew.-%, ganz besonders bevorzugt 65 Gew.-%, noch weiter bevorzugt zumindest 80 Gew.-%, wie 81 Gew.-%, 82 Gew.-%, 83 Gew.-%, 84 Gew.-%, 85 Gew.-%, 86 Gew.-%, 87 Gew.-%, 88 Gew.-%, 89 Gew.-%, 90 Gew.-%, wie 91 Gew.-%, 92 Gew.-%, 93 Gew.-%, 94 Gew.-%, 95 Gew.-%, 96 Gew.-%, 97 Gew.-%, 98 Gew.-%, 99 Gew.-% bemessen an allen Komponenten des Reaktionsgemisches beträgt. Der Fachmann weiß dabei, dass er die Menge an zuzusetzender zweiter Aktivkomponente bzw. zuzusetzendem inerten Feststoff durch einfache Differenzbestimmung ermitteln kann, wobei er zunächst die Menge an einzusetzendem Edukt (bspw. durch Auswiegen) bestimmt und danach die Menge an zweiter Aktivkomponente bzw. inerten Feststoff als Differenz zu den vorgenannten Schwellwerten vorzugsweise vor der mechanochemisch katalysierten Reaktion zusetzt.

Der hohe Gesamtanteil an Feststoffen, wie vorweg definiert, aller an der Reaktion beteiligten Komponenten in Form als Edukte (d.h. Reaktanden bzw. zweite Aktivkomponenten) aber auch als Inertmaterial während der mechanochemisch katalysierten Umsetzung ermöglicht vorteilhaft eine bessere Energieübertragung, was zu höheren Umsätzen der Edukte führt.

Umgedreht hat sich gezeigt, dass bei mechanochemisch katalysierten Reaktion, bei denen die überwiegende Mehrzahl der Edukte unter den gegebenen Reaktionsbedingungen ein Feststoff ist, der Zusatz kleiner Mengen einer Flüssigkeit als Mahlhilfe zu der mechanochemisch katalysierten Umsetzung mit einer Menge im Bereich zwischen 0 und 1 *µ*l Flüssigkeit pro mg Material (sog. *ε*-Wert) die mechanochemisch katalysierte Umsetzung begünstigt (sog. "Liquid assisted grinding"). Die zugesetzte Flüssigkeit dient dabei nicht wie in einer klassischen Lösung als Lösungsmittel, sondern verbessert als Mahlhilfe den Massentransfer der Reaktanten während der mechanochemisch katalysierten Umsetzung.

### Ausführliche Definition der Erfindung

### Katalysator

Ein "Katalysator" bzw. ein "katalytisch aktives Material" bezeichnet hierin einen Stoff, der die Reaktionsgeschwindigkeit einer chemischen Reaktion beeinflusst, ohne dabei selbst verbraucht oder verändert zu werden. Folglich geht der Katalysator aus der Reaktion unverändert hervor und wird nicht Teil des Reaktionsproduktes. Vorteilhaft ist eine Regeneration des Katalysators bzw. des katalytischen Materials während der Reaktion oder danach nicht erforderlich. Dies geschieht durch Herabsetzung der Aktivierungsenergie, wodurch eine chemische Reaktion direkt durch den Katalysator bzw. durch das katalytisch aktive Material überhaupt erst in Gang gebracht, diese beschleunigt oder die Selektivität in eine favorisierte Richtung gelenkt wird.

Erfindungsgemäß handelt es sich bei dem mechanochemischen Verfahren um eine "direkte heterogene Katalyse" (hierin auch als "direkte heterogene Katalyse einer chemischen Reaktion" oder "Katalysereaktion" bezeichnet). Dies bedeutet im Sinne der vorliegenden Erfindung, dass das katalytisch aktive Material nicht lediglich als Intermediat oder Regenerierungsmittel für den eigentlichen Katalysator dient, sondern selbst die katalytische Reaktion induziert.

"Energieübertragendes Inkontaktbringen" des Formkörpers während des Schritts (c) des direkten mechanochemischen Umsetzens des zumindest einen Edukts zu einem Produkt bedeutet im Sinne der vorliegenden Erfindung, dass durch den Zusammenstoß zwischen dem Formkörper und dem Edukt (in dem Reaktionsraum) ein Energieeintrag in das System erfolgt, z.B. für kurze Zeit lokal Temperaturen über 1000°C und Drücken im Gigapascal Bereich auftreten. Zumindest wirken in einem Mahlgefäß (z.B. einer Planetenkugelmühle) bis zu 100 g Beschleunigung auf den Formkörper (z.B. in Form als Mahlkugel), sodass entsprechend Eₖᵢₙ = ½ mv² eine hohe Menge an kinetischer Energie (und die kurzfristig auftretenden Hotspots zwischen den Formkörpern) auf das Eduktmolekül übertragen wird bzw. der Anpressdruck des Formkörpers auf eine Wandung des Reaktionsgefäß sehr hoch ist.

Vorteilhaft laufen die mechanochemischen Reaktionen bei Temperaturen im Reaktionsraum (z.B. des Mahlgefäßes) ab die viel niedriger sind als bei klassischen thermisch aktivierten Reaktionen in einem Kolben. Vorteilhaft bleiben der Reaktionsraum (mit den darin enthaltenen Edukten bzw. Produkten) selbst und die Atmosphäre im Reaktionsraum unter der Temperatur, die normalerweise für die klassische heterogene Katalyse benötigt wird.

Das energieübertragende Inkontaktbringen der Edukte mit dem Formkörper gemäß Schritt (c) wird bevorzugt wiederholt über einen Zeitraum von zumindest 5 Minuten, ganz besonders bevorzugt über einen Zeitraum zwischen 10 Minuten und 48 Stunden erfolgt. Ein wiederholtes Inkontaktbringen über einen längeren Zeitraum ist für industrielle Prozesse nur wenig erstrebenswert.

Zur Minimierung einer ungewünschten Verformung des Formkörpers während des mechanochemischen Verfahrens weist das katalytisch aktive Material ein Kompressionsmodul von zumindest 160 GPa, vorzugsweise zumindest 175 GPa auf.

Es ist zudem wünschenswert, dass das katalytisch aktive Material eine Mohshärte von zumindest 3,0, vorzugsweise zumindest 3,5, ganz besonders bevorzugt zumindest 4,0 aufweist, wodurch vorteilhaft ein unerwünschter (Metall-)Abrieb des Formkörpers vermieden werden kann (vgl. Tabelle 3).

Aufgrund des hohen Kompressionsmoduls und der hohen Mooshärte kann der Formkörper, der das katalytisch aktive Material umfasst oder daraus besteht wiederholt in einem mechanochemischen Verfahren eingesetzt werden. Nicht zuletzt dadurch eignet sich das hierin offenbarte mechanochemische Verfahren vorteilhaft für großtechnische Anwendungsgebiete.

Zudem hat sich gezeigt, dass der Einsatz von katalytisch aktiven Materialien, die ein hohes Kompressionsmodul und/oder eine hohe Mohshärte aufweisen, in dem hierin offenbarten mechanochemischen Verfahren vorteilhaft ist, da diese deutlich aktiver sind, was sich durch (wesentlich) höhere Umsätze in den chemischen Reaktionen widerspiegelt (vgl. Tabelle 3). Ein Grund hierfür scheint eine mit dem höheren Kompressionsmodul bzw. der höheren Mohshärte einhergehende erhöhte Energieübertragung auf die Edukte zu sein, was zu einem höheren Wirkungsgrad bei den Kugel-Wand-Stößen führt.

In der nachfolgenden Tabelle sind das Kompressionsmodul und die Mohshärte von katalytisch aktiven Materialien aufgeführt, die besonders bevorzugt in dem erfindungsgemäßen mechanochemischen Verfahren eingesetzt werden.

| | Kompressionsmodul [GPa] | Mohshärte |
|---|---|---|
| Ru | 220 | 6,5 |
| Rh | 380 | 6,0 |
| Ni | 180 | 3,8 |
| Pd | 180 | 4,8 |
| Pt | 230 | 4,3 |
| Fe | 170 | 4,0 |
| Co | 180 | 5,0 |
| Au | 220 | 3,0 |
| Cu (Referenz) | 138 | 3,0 |

Bevorzugt umfasst das katalytisch aktive Material ein Metall aus der Gruppe bestehend aus einem (elementaren) Metall der Gruppen 6 bis 10 des Periodensystems (PSE), vorzugsweise Ruthenium (Ru), Rhodium (Rh), Nickel (Ni), Palladium (Pd), Platin (Pt), Eisen (Fe), Cobalt (Co), Gold (Au) oder einem Gemisch daraus, insbesondere eine Legierung mit diesen Metallen. Es kann auch vorgesehen sein, dass das katalytisch aktive Material eines der vorgenannten (elementaren) Metalle ist, d.h., dass dem katalytisch aktiven Material keine anderen Komponenten, wie z.B. katalytisch aktive (Metall-)Salze, Regenerierungsmittel zur Regenerierung des katalytisch aktiven Materials oder dergleichen zugesetzt sind.

Nach einer bevorzugten Ausgestaltung des vorliegenden mechanochemischen Verfahrens wird als katalytisch aktives Material eine Metalllegierung, wie bspw. eine Pt/Au-, Pd/Au-, Fe/Co-, Fe/Ni-, Fe/Cr-, Fe/Mn-, Ni/Pt-, Ni/Pd-, Pt/Cu-, Pd/Cu-, Cu/Sn- oder Cu/Zn-Legierung eingesetzt. Durch die Verwendung von Legierungen lässt sich vorteilhaft der Härtegrad des katalytisch aktiven Materials und damit auch des Formkörpers gezielt einstellen, wodurch der Energieübertrag und -eintrag während des direkten mechanochemischen Umsetzens des zumindest einen Edukts zu einem Produkt durch das energieübertragende Inkontaktbringen dieser mit dem Formkörper verbessern lässt. Zudem kann durch den Einsatz von Legierungen, deren Kompressionsmodul und/oder Mohshärte die hierin definierten Werte erfüllt, als katalytisch aktives Material vorteilhaft ein unerwünschter Materialabrieb und/oder eine unerwünschte Verformung des katalytisch aktiven Materials und damit einhergehend des Formkörpers während des mechanochemischen Verfahrens minimiert oder sogar unterbunden werden.

Prinzipiell existieren hier unendlich viele Möglichkeiten die härte von katalytisch aktiven Materialien sehr einfach durch Beimischung eines anderen Metalls zu erhöhen. So haben sich darüber hinaus auch Metalllegierungen, wie Cu/Ni-, Cu/Al-, Cu/Mn-, Cu/Ag-, Co/Mn-, Ni/Ag-Legierungen und Mischungen, insbesondere eine Mehrstofflegierung davon als besonders geeignete katalytisch aktive Materialien erwiesen.

Der Fachmann weiß, dass er allen vorgenannten Legierungen bei Bedarf auch andere Metalle in kleineren und größeren Mengen beimischen kann, um dadurch beispielsweise die Eigenschaften, insbesondere das Kompressionsmodul und/oder die Mohshärte des katalytisch aktiven Materials entsprechend den erforderlichen Reaktionsbedingungen, aber auch dessen Reaktivität gezielt zu modifizieren und daher die vorgenannten Legierungen lediglich die Basis bzw. den Hauptbestandteil darstellen. Das katalytisch aktive Material kann somit auch eine Mehrstofflegierung der vorgenannten Legierungen sein.

Ganz besonders bevorzugt besteht das katalytisch aktive Material aus einem Material der nachstehenden Tabelle bzw. einer Mischung daraus, wobei gegebenenfalls das Kompressionsmodul und die Mohshärte des katalytisch aktiven Materials zu berücksichtigen sind.

| Metall der Gruppe 10 des PSE | Nickel | Palladium | Platin |
|---|---|---|---|
| Legierung damit | Monel (NiCu33) | PdCu30 | PtAu10 |
| | Hastelloy (NiMo30) | PdAg40 | PtCu4 |
| | Nichrome (NiCr20) | PdSn15 | |
| Metall der Gruppe 11 des PSE | Silber | Gold | |
| Legierung damit | AgPt5 | AuCu18Al6 | Messing (z.B. CuZn35) |
| | AgCu25 | Weißgold | Bronze (z.B. CuSn12) |
| | | (AuNi10) | Aluminium-Bronze (z.B. CuA110Fe5Ni5) |
| weitere Metalle | Eisen | Rhodium | Chrom |
| Legierung damit | 1.4301 | Pt30Rh | FeCr50 |
| | (z.B. X5CrNi18-10) | ODS Pt20Rh | |
| | 1.4104 | FKS Pt10Rh | |
| | (z.B. X14CrMoS17) | | |

Insbesondere lassen sich durch die Verwendung von Cu-Legierungen vorteilhaft der die Festigkeiten bis ca. 700 MPa, in speziellen Fällen sogar bis zu 1500 MPa gegenüber reinem Kupfer erzielen.

Besonders bevorzugt ist das katalytisch aktive Material ein Metall aus der Gruppe bestehend aus einem Metall der Gruppen 6 bis 10 des Periodensystems, vorzugsweise Ru, Rh, Ni, Pd oder Pt, ganz besonders bevorzugt Pd oder Pt umfasst oder daraus besteht.

Um Kosten zu senken und um einem eventuellen Materialabrieb, insbesondere des katalytisch aktiven Materials entgegenzuwirken, sind dem Verfahren bevorzugt auch solche Formkörper zugesetzt, die kein katalytisch aktive Material aufweisen bzw. die nicht ausschließlich daraus bestehen. Anhand der vorliegenden Erfindung ist klar, dass der Formkörper in diesem Fall vorzugsweise ebenfalls ein Kernmaterial umfasst bzw. daraus besteht, das ein geringes Elastizitätsmodul (E-Modul) bzw. eine hohe Druckfestigkeit aufweisen, wie bspw. Stahl, ZrO₂, TiO₂, Al₂O₃, WC, SiC, Si₃N₄, B₄C, BN oder Mischoxidkeramiken, wie ATZ / ZTA, aber auch BeO und MgO. Vorteilhaft bietet der Einsatz härterer Kernmaterialien für den Formkörper, die ein geringes Elastizitätsmodul aufweisen, eine bessere Energieübertragung und damit einen höheren Wirkungsgrad bei den Kugel-Wand-Stößen. Gleichwohl kann auch die Dauer des Mahlvorgangs erhöht werden.

Da ein möglicher Abrieb - falls auftretend - primär beim Inkontaktbringen der Wandung/Oberfläche eines Mahlgefäßes mit solchen Formkörpern auftritt, die als Mahlkugeln ausgebildet sind und weniger durch das Inkontaktbringen der Formkörper mit dem Pulver (Reaktionsgemisch), kann ein möglicher Abrieb durch eine hohe Menge eingesetzten Edukts (in Form als Feststoff und/oder Flüssigkeit) und/oder in Kombination mit einer verkürzten Mahldauer stark reduziert werden.

### Mögliche Reaktionen

Verfahren zur Durchführung katalytischer Reaktionen sind in der Literatur beschrieben und dem Fachmann hinreichend bekannt.

Bevorzugt wird das erfindungsgemäße mechanochemische Verfahren für die Reaktion organischer Verbindungen eingesetzt, vorzugsweise zur Knüpfung organischer Verbindungen, wie nachstehend beispielhaft beschrieben.

Beispiele für organische Katalysereaktionen, in denen das erfindungsgemäße mechanochemische Verfahren zur direkten heterogenen Katalyse eingesetzt werden kann, sind die Hydroformylierung, die Hydrierung, die Isomerisierung, die Reduktion, die Dehydrierungsreaktion, die Olefinmethathese, die Hydroformylierung, die Arylaminierung, die Hydrosilylierung, die Kreuzkupplungsreaktion (d.h. C-C-, C-O- oder C-N-Kupplungen, wie zum Beispiel Suzuki-Kupplung, Heck-Reaktion, Negishi-Kupplung, Yamamoto-Kupplung, Reduktive Kupplungen, Ullmann-Kupplung, Glaser-Kupplung, Scholl-Reaktion, Cadiot-Chodkiewicz-Kupplung, Sonogashira-Kupplung, Buchwald-Hartwig-Kupplung, Tsuji-Trost-Reaktion, Kupplung mit Grignardverbindungen), die Olefindimerisierung, die Olefinoligomerisierung, die Cyclopropanierung, die Reduktion von Halogenarenen und die Polymerisation (Homo- und Copolymerisation) und die Telomerisationsreaktionen. Die Polymerisation kann dabei auch als Kreuzkupplungsreaktion (sog. Metathesepolymerisation) ablaufen.

Als bevorzugte Beispiele für heterogen katalysierte chemische Reaktionen können die Hydroformylierung, Hydrierung, Arylaminierung, Hydrosilylierung, Heck-Reaktion, Suzuki-Kupplung, Kumada-Kupplung, Stille-Kupplung, Sonogashira-Kupplung, Olefinmetathese, Cyclopropanierung, Reduktion von Halogenarenen, Polymerisation oder Telomerisationsreaktionen genannt werden.

Bevorzugte organische Katalysereaktionen, in denen das erfindungsgemäße mechanochemische Verfahren zur direkten heterogenen Katalyse eingesetzt werden kann, sind die Kreuzkupplungsreaktion (wie oben definiert) und Polymerisation (Homo- und Copolymerisation).

In der nachfolgenden Tabelle sind bevorzugte Metalle aufgelistet, die direkt als katalytisch aktives Material in einzelnen der hierin aufgeführten mechanochemischen Verfahren zur direkten heterogenen Katalyse eingesetzt werden können:

| **Reaktionstyp** | **katalytisch aktives Material (d.h. direkt als Katalysator wirkend)** |
|---|---|
| **Kreuzkupplungen (C-C, C-N, C-O) z.B.:** | Palladium, Platin, Nickel, Eisen |
| Suzuki-Kupplung | Palladium, Nickel |
| Heck-Reaktion | Palladium, Nickel |
| Negishi-Kupplung | Palladium, Nickel |
| Yamamoto-Kupplung | Nickel |
| Reduktive Kupplungen | Nickel |
| Sonogashira-Kupplung | Palladium |
| Buchwald-Hartwig-Kupplung | Palladium, Eisen |
| Tsuji-Trost-Reaktion | Palladium |
| Kupplung mit Grignardverbindungen | Eisen, Magnesium, Zink, Palladium, Nickel |
| Glaser-Kupplung | Kupfer (bzw. dessen Legierungen) |
| Ullmann-Kupplung | Kupfer (bzw. dessen Legierungen) |
| **Hydrierung** | Palladium, Platin, Nickel, Cobalt, Eisen |
| **Isomerisierung** | Cobalt, Eisen, Palladium |
| **Reduktion** | Eisen, Palladium, Platin, Ruthenium |
| **Dehydrierungsreaktionen** | Silber, Gold |
| **Olefinmethathese** | Ruthenium |
| **Hydroformylierung** | Rhodium |

Je nach Erfordernis können der Katalysereaktion Säuren oder Basen zugesetzt werden.

Der Begriff "Abgangsgruppe" bezeichnet ein Atom oder eine Gruppe (geladen oder ungeladen), das/die durch Teilnahme an einer spezifischen Reaktion von einem Atom in dem Teil, der als Rest- oder Hauptteil des Moleküls betrachtet wird, getrennt wird (siehe auch PAC, 1994, 66, 1134).

Nach einer bevorzugten Ausgestaltung der vorliegenden Erfindung ist das Reaktionsprodukt, dass durch das erfindungsgemäße mechanochemische Verfahren erhalten werden kann ein Polymer - das in Folge einer Kettenreaktion mehrerer Monomereinheiten erhalten wird. Die Polymere, die mit dem erfindungsgemäßen mechanochemischen Verfahren synthetisiert werden können, umfassen Homopolymere, statistische Copolymere, zufällig verteilte Copolymere, alternierende Copolymere und Blockcopolymere sowie deren Kombinationen. Derartige Polymere können in Analogie zu Verfahren synthetisiert werden, die dem Fachmann bekannt und in der Literatur bereits ausführlich beschrieben sind. Andere Polymere lassen sich den Ausführungsbeispielen entnehmen. Beispielsweise lassen sie sich in geeigneter Weise durch Aryl-Aryl-Kupplungsreaktionen, wie Yamamoto Kupplung, Suzuki-Kupplung, Stille-Kupplung, Sonogashira-Kupplung, Heck-Kupplung oder Buchwald-Kupplung, herstellen.

Bevorzugte Verfahren für die Polymerisation sind diejenigen, die zu C-C-, C-O- oder C-N-Kupplung, besonders bevorzugt zu C-C-Kupplungen führen, wie die Suzuki-Polymerisation, wie z. B. in der WO 00/53656 beschrieben, die Yamamoto-Polymerisation, wie z. B. in T. Yamamoto et al., Progress in Polymer Science 1993, 17, 1153-1205, oder in der WO 2004/022626 A1 beschrieben, und die Stille-Kupplung.

Der Begriff "Monomereinheit" bzw. "Monomer" bezeichnen die zu Grunde liegende Wiederholungseinheit, bei der es sich um die kleinste zu Grunde liegende Einheit handelt, deren Wiederholung ein reguläres Makromolekül, ein reguläres Oligomermolekül, ein regulärer Block oder eine reguläre Kette darstellt (PAC, 1996, 68, 2291).

Die Monomere, die zur Bildung der Polymere polymerisiert werden, sind dem Fachmann bekannt und können nach dem ihm bekannten Verfahren hergestellt werden.

Wird für die Polymerisation als Monomer lediglich ein Edukt eingesetzt (Selbstpolymerisation), so ist dieses selbstverständlich als bifunktionelle chemische Verbindung der Struktur ausgebildet. Bei der Selbstkondensation weist das Monomer eine sog. AB-Struktur auf, wobei A eine erste funktionelle Gruppe ist, die dazu geeignet ist, mit B als einer zweiten funktionellen Gruppe unter Knüpfung einer neuen chemischen Verbindung zu reagieren.

Als Beispiele für Polymerisationen ist neben den anderen hierin offenbarten Reaktionstypen auch die Ringöffnungsmetathese-Polymerisation (ROMP), die in Gegenwart von Metallen, wie Pd, Rh, Ru, Molybdän und Legierungen damit als katalytisch aktives Material durchgeführt wird.

Darüber hinaus kann das hierin offenbarte Verfahren auch für Depolymerisationen eingesetzt werden, wobei als katalytisch aktives Material bevorzugt Fe, Ni und Legierungen damit eingesetzt werden.

Der beste Energieübertrag erfolgt dann, wenn zumindest ein Edukt in dem Reaktionsgenmisch als Feststoff (d.h. als feste, ungelöste Komponente) vorliegt.

Der Fachmann weiß, dass er dem Reaktionsgefäß beim Bereitstellen zumindest zweier Edukte in Schritt (a) des erfindungsgemäßen Verfahrens die Edukte zueinander in stöchiometrischen oder unterstöchiometrischen Verhältnissen zugegeben kann.

Ebenso kann(können) das(die) Edukt(e) dem erfindungsgemäßen mechanochemischen Verfahren auch kontinuierlich oder diskontinuierlich (z.B. in mehreren Stufen) zugegeben werden.

### Formkörper

Der Begriff "Formkörper" bezeichnet im Sinne der Erfindung einen Gegenstand von konstruktiver Gestalt dem diese aktiv gegeben wurde, und der z.B. durch spanlose Formung (z.B. durch Pressen, Pressspritzen oder Spritzgießen) in allseitig geschlossenen Werkzeugen hergestellt worden ist. Alternativ dazu ist der Formkörper ein gewollt geformter Körper/Gegenstand in Form von Pellets (z.B. durch Eintropfen in eine Flüssigkeit erhalten), Ringen, Stiften oder Schrot. Bevorzugt ist, dass der Formkörper aus einem Vollmaterial aufgebaut ist, d.h. keine Makro- oder Mesoporen, ganz besonders bevorzugt zudem keine Mesoporen aufweist, wodurch vorteilhaft ein unerwünschter Materialabrieb und/oder eine unerwünschte Verformung des Formkörpers während des mechanochemischen Verfahrens minimiert oder sogar unterbunden wird.

Der Formkörper umfasst zumindest ein katalytisch aktives Material.

Besonders bevorzugt ist das katalytisch aktive Material - wie der Formkörper - aus einem Vollmaterial (z.B. als immobilisierte Beschichtung oder in Forme einer Folie) aufgebaut, d.h. das katalytisch aktive Material weist keine Makro- oder Mesoporen, ganz besonders bevorzugt keine Mesoporen auf.

D.h., damit der Formkörper bzw. das katalytisch aktive Material während der direkten mechanochemischen Umsetzung als energieübertragende Komponente verwendet werden kann bzw. unerwünschter (Metall-)Abrieb und der damit verbundene Eintrag von partikulärem Formkörpermaterial bzw. katalytisch aktiven Material in das Reaktionsgemisch unterbunden wird und ebenfalls eine unerwünschte Verformung des Formkörpers bzw. katalytisch aktiven Materials während des mechanochemischen Verfahrens minimiert oder sogar unterbunden wird, werden der erfindungsgemäß eingesetzte Formkörper bzw. das katalytisch aktive Material nicht in Form als Pulver oder Bulk-Material eingesetzt. Gleiches gilt ebenfalls für das katalytisch aktive Material, wenn der Formkörper aus diesem besteht.

Es kann beispielsweise vorgesehen sein, dass zumindest ein Segment des Formkörpers (z.B. bei einer Extruderschnecke oder einem Mahlgefäß) das katalytisch aktive Material umfasst oder daraus besteht.

Vorzugsweise ist das katalytisch aktive Material zumindest teilweise auf der Oberfläche des Formkörpers als Schicht, z.B. als immobilisierte Beschichtung oder in Form einer Folie, die sich an den Formkörper (formschlüssig) anschmiegt, ausgebildet.

Als Kernmaterialien für den Formkörper (z.B. Mahlkugel bzw. Mahlgefäß) eignen sich hierfür insbesondere Materialien, die ein geringes Elastizitätsmodul (E-Modul) bzw. eine hohe Druckfestigkeit aufweisen, wie bspw. Stahl (E-Modul =210 GPa), Zirkondioxid ZrO₂ (E-Modul = 205 GPa), Titandioxid TiO₂ (E-Modul = 293 GPa), Aluminiumoxid Al₂O₃ (E-Modul = 300-380 GPa), Wolframcarbid WC (E-Modul = 550-630 GPa), gesintertes oder heißgepresstes Siliziumcarbid SiC (E-Modul = 450 GPa), Siliziumnitrid Si₃N₄ (E-Modul = 310 GPa), Borcarbid B₄C (E-Modul = 440-470 GPa), kubisches Bornitrid c-BN oder Mischoxidkeramiken wie ATZ / ZTA (E-Modul = 240-350 GPa), aber auch Berylliumoxid BeO (E-Modul = 390 GPa) und Magnesiumoxid MgO (E-Modul = 310 GPa). Vorteilhaft bietet der Einsatz härterer Kernmaterialien für den Formkörper, die ein geringes Elastizitätsmodul aufweisen, eine bessere Energieübertragung und damit einen höheren Wirkungsgrad bei den Kugel-Wand-Stößen.

Die vorgenannten Materialien, die als Kernmaterial für den Formkörper eingesetzt werden, eignen sich aufgrund ihrer chemischen Stabilität und Inaktivität sowie aufgrund ihrer hohen E-Module ebenso für den Einsatz als festes Intermaterial.

Alternativ bevorzugt ist der Formkörper als Kompositformteil ausgebildet, wobei das katalytisch aktive Material in die Struktur des Formkörpers eingebettet ist oder eine Netzwerkstruktur innerhalb des Formkörpers ausbildet.

Nach einer ganz besonders bevorzugten Ausgestaltung der vorliegenden Erfindung besteht der Formkörper aus dem katalytisch aktiven Material.

Unabhängig davon kann der Formkörper als energieübertragende Komponente einer Kugelmühle (d.h. als das Mahlgefäß und/oder zumindest eine Mahlkugel), einer Exzenterschwingmühle (d.h. als zumindest eine Mahlkugeln), einer Rotorschlagmühle (d.h. als das Mahlgefäß und/oder ein Rotor), einer Stiftmühle (d.h. als das Mahlgefäß und/oder zumindest ein Stift) oder eines Extruders (d.h. als die Extruderschnecke) für die kontinuierliche und zumeist industrielle Umsetzung der Erfindung ausgebildet sein.

Ist der Formkörper als Mahlkugel ausgebildet, weisen die Mahlkugeln für eine ideale Energieübertragung vorzugsweise einen Durchmesser von zumindest 2 mm, besonders bevorzugt von zumindest 5 mm, ganz besonders bevorzugt von zumindest 10 mm auf.

Es hat sich gezeigt, dass die Energieübertragung auf die Edukte besonders gut ist, wenn als Reaktionsgefäß für die direkte heterogene Katalyse ein Mahlgefäß (Mühle), wie z.B. eine Kugelmühle oder eine Planetenkugelmühle verwendet wird. Derartige Mahlgefäße weisen einen Mahlreaktor und darin angeordnete (freibewegliche) Mahlkugeln auf. Der grundsätzliche Aufbau solcher Mahlgefäße ist dem Fachmann bekannt. Nach einer bevorzugten Ausgestaltung der Erfindung ist der Formkörper daher ein Mahlreaktor und/oder eine oder mehrere Mahlkugel, wobei das katalytisch aktive Material zumindest teilweise auf deren Oberfläche aufgebracht ist. Alternativ dazu können auch ganze Komponenten, wie z.B. der Mahlreaktor oder die darin angeordneten (freibeweglichen) Mahlkugeln vollständig oder teilweise aus dem katalytisch aktiven Material bestehen.

Nach einer bevorzugten Ausgestaltung wird für die chemische Umsetzung der Edukte eine Mixermühle, eine Planetenkugelmühle, ein Extruder oder eine Rührwerkskugelmühle eingesetzt. Mit diesen Mühlentypen wurden die besten Umsätze erzielt.

Die Mahlfrequenz, bspw. bei Umsetzung in einer Mixermühle liegt dabei vorzugsweise im Bereich von zumindest 15 Hz bis 35Hz, besonders über 20 Hz, ganz besonders bevorzugt im Bereich von zumindest 30 Hz bis 35 Hz.

Optimale Ergebnisse, bspw. bei Umsetzung in einer Planetenmühle konnten ebenso bei Rotatinsgeschwindigkeiten im Bereich von 200 bis 1600 rpm, bevorzugt im Bereich von 400 bis 1600 rpm, ganz besonders bevorzugt im Bereich von 600 bis 1600 rpm erzielt werden.

Der Füllgrad des eingesetzten Mahlgefäßes liegt ganz besonders bevorzugt im Bereich von 20 bis 40 Vol.-% Mahlkugeln und 20 bis 40 Vol.-% Mahlgut (d.h. Füllung, umfassend Edukte (Reaktanden bzw. zweite Aktivkomponenten) und Inertmaterial).

Es hat sich gezeigt, dass die Mahlzeit, d.h. die letztendliche Reaktionszeit, wobei das energieübertragende Inkontaktbringen der Edukte mit dem Formkörper gemäß Schritt (c) wiederholt erfolgt, für die mechanochemische Umsetzung im Bereich von 1 Minute bis zu 48 Stunden, bevorzugt unter 8 Stunden, ganz besonders unter 4 Stunden beträgt. Auch bevorzugt erfolgt das energieübertragende Inkontaktbringen der Edukte mit dem Formkörper gemäß Schritt (c) wiederholt über einen Zeitraum von zumindest 5 Minuten, besonders bevorzugt zumindest 10 Minuten.

Beispielsweise hat sich gezeigt, dass zur Durchführung des erfindungsgemäßen Verfahrens zur direkten heterogenen Katalyse einer chemischen Reaktion, z.B. einer Polymerisation in einer Kugelmühle mit mindestens 2 massiven Mahlkugeln (bspw. bestehend aus porenfreiem Palladium oder Platin als katalytisch aktives Material) innerhalb von wenigen Stunden, vorzugsweise zumindest 8 Stunden bei Raumtemperatur aus dem Monomer (bspw. 4-Bromphenylboronsäure) das Polymer Polyparaphenylen (PPP) hergestellt werden kann.

Ein besonderer Vorteil bei der Synthese von Polymeren unter Einsatz des erfindungsgemäßen Verfahrens besteht darin, dass der zumeist limitierende Faktor - d.h. das Ausfallen des Polymers während der Polymerisation - nicht eintritt, da die Reaktion von vornherein als Festphasenreaktion durchgeführt wird.

Dadurch lassen sich vorteilhaft ganz neue Möglichkeiten bei der chemischen Umsetzung von Edukten realisieren.

In einer bevorzugten Ausgestaltung der vorliegenden Erfindung ist der Formkörper dazu geeignet, die zum direkten mechanochemischen Umsetzen erforderliche Energie auf die Edukte zu übertragen und/oder die Edukte (homogen) zu vermischen. Der Formkörper kann dabei in jeder erdenklichen Form (wie hierin definiert) ausgestaltet sein.

Bei der Verwendung einer Mahlvorrichtung (z.B. einer Mühle) ist der Formkörper daher beispielsweise als der Mahlreaktor und/oder zumindest eine Mahlkugel ausgestaltet. Im Labormaßstab hat sich gezeigt, dass für gewöhnlich Mahlkugeln mit einem Durchmesser zwischen 5 und 15 mm besonders geeignet sind. In Abhängigkeit des eingesetzten Materials, insbesondere des katalytisch aktiven Materials, weisen die Mahlkugeln eine Masse im Bereich zwischen 1.95 g und 26.21 g auf.

Besonders vorteilhaft können das Mahlgefäß und die Mahlkugeln als Katalysator wiederverwendet werden.

Alternativ dazu ist es für einige Reaktionen, insbesondere für die kontinuierliche und zumeist industrielle Umsetzung der Erfindung (z.B. Polymerisation zur Herstellung von Folien) zielführend, dass der Formkörper eine Extruderschnecke ist.

Es kann dabei durchaus vorgesehen sein, dass die direkte heterogen katalysierte chemische Reaktion, die durch das erfindungsgemäße Verfahren realisiert wird, lediglich einen Teilschritt (d.h. eine Vorreaktion oder eine Zwischenreaktion; z.B. eine erste Reaktionsstufe, eine zweite Reaktionsstufe, usw.) innerhalb einer komplexen chemischen Reaktion darstellt.

Eine "komplexe chemische Reaktion" wird hierin als die Umsetzung zumindest zweier Edukte zu einem Endprodukt verstanden, wobei die chemische Reaktion aus mehreren Reaktionsstufen zusammengesetzt ist, wobei nach jeder einzelnen Reaktionsstufe das(die) entsprechende(n) Edukt(e) zu einem Zwischenprodukt bzw. Endprodukt umgesetzt werden.

Dabei kann es erforderlich sein, dass dem Produkt aus der vorangegangenen Reaktionsstufe bzw. dem Reaktionsgefäß während der komplexen chemischen Reaktion vor jeder weiteren Reaktionsstufe von außen zumindest ein weiteres Edukt zugesetzt wird. Das weitere Edukt kann dabei das gleiche oder ein unterschiedliches Edukt aus einer der vorhergehenden Reaktionsstufen darstellen. Diese Art der chemischen Umsetzung bietet sich bspw. dann an, wenn sich in einer mehrstufigen Reaktion an eine Zwischenstufe mit einem Intermediat eine weitere Reaktionsstufe anschließt oder anschließen soll.

Die vorliegende Erfindung betrifft zudem einen Formkörper (wie oben näher definiert), insbesondere einen Reaktionskatalyseformkörper zum direkten heterogenen Katalysieren einer chemischen Reaktion, der ein katalytisch aktives Material umfasst, wobei das katalytisch aktive Material ein Metall aus der Gruppe bestehend aus Ru, Rh, Ni, Pd, Pt, Co, Au oder ein Gemisch daraus umfasst.

Das katalytisch aktive Material zeichnet sich dabei insbesondere ein Kompressionsmodul von zumindest 160 GPa und eine Mohshärte von zumindest 3,0 auf.

Nach einer bevorzugten Ausgestaltung umfasst der Formkörper (wie oben näher definiert) ein katalytisch aktives Material, wobei das katalytisch aktive Material ein Metall aus der Gruppe bestehend aus Ru, Rh, Ni, Pd, Pt, Co, Au, ein Gemisch daraus oder eine Legierung basierend auf einem Metall ausgewählt aus der Gruppe bestehend aus einem Metall der Gruppen 6 bis 10 des Periodensystems, vorzugsweise Ru, Rh, Ni, Pd, Pt, Co, Au oder Cu - wie bspw. Pt/Au-, Pd/Au-, Fe/Co-, Fe/Ni-, Fe/Cr-, Fe/Mn-, Ni/Pt-, Ni/Pd-, Pt/Cu-, Pd/Cu-, Cu/Sn-, Cu/Zn-, Cu/Ni-, Cu/Al-, Cu/Mn-, Co/Mn- oder Ni/Ag-Legierung umfasst, wobei das katalytisch aktive Material keine Makro- oder Mesoporen aufweist.

Die vorliegende Erfindung betrifft auch die Verwendung eines Formkörpers, wie hierin definiert, als heterogenen Katalysator in einem Verfahren zum direkten heterogenen Katalysieren einer chemischen Reaktion.

### Ausführungsbeispiele

Anhand folgender Figuren und Ausführungsbeispiele soll die vorliegende Erfindung näher erläutert werden, ohne die Erfindung auf diese zu beschränken.

Dabei zeigt
- **Fig. 1:**: die schematische Darstellung des erfindungsgemäßen mechanochemischen Verfahrens zum direkten heterogenen Katalysieren am Beispiel der 4-Bromphenylboronsäure.
- **Fig. 2:**: Spektren der Probe PPP_{PBM}-6. (A) XRD des Polymers, Referenz berechnet gemäß Sasaki et al. (J. Polym. Sci. Part B Polym. Phys. 1992, 30, 293-297). (B) IR-Spektrum des Monomers und des Polymers. (C) Raman-Spektrum des Monomers und Polymers.
- **Fig. 3:**: das MALDI Massenspektrum eines Polyorthophenylen, welches durch die mechanochemische Umsetzung gemäß Ausführungsbeispiel 3 hergestellt wurde.
- **Fig. 4:**: ein Spektrum der erfolgreichen Yamamoto Kupplung gemäß Ausführungsbeispiel 4, wobei der Peak bei 6.8 min verbleibendes Edukt zeigt und der Peak bei 11.15 min repräsentiert das Kupplungs-Produkt. Kleinere, nachfolgende Peaks wurden als iodierte Biphenyl-Isomere identifiziert. Die Integration zeigt, dass ein Umsatz von 63% erzielt wurde.

### Beispiel 1 - mechanochemische Umsetzung 4-Bromphenylboronsäure

In einer klassischen Synthese wurden 1,454 g (7,2 mmol) 4-Bromphenylboronsäure, 8,510 g (61 mmol) K₂CO₃ als Base und 4,7 mol% (0,34 mmol) Katalysator in einer Planetenkugelmühle (PBM) mit 22 ZrO2-Mahlkugeln (10 mm Größe, je 3,2 g) bereitgestellt. Das Reaktionsgemisch wurde x Stunden (jeweils entsprechend angegeben) gemahlen und zu Poly(para-phenylen) (PPP; siehe Tabelle 1) umgesetzt. Anschließend wurde das Reaktionsprodukt mit Wasser, 10 Gew.-% HCl, Ethanol und Aceton gewaschen und über Nacht bei 80°C getrocknet.

### Probenanalyse (allgemein)

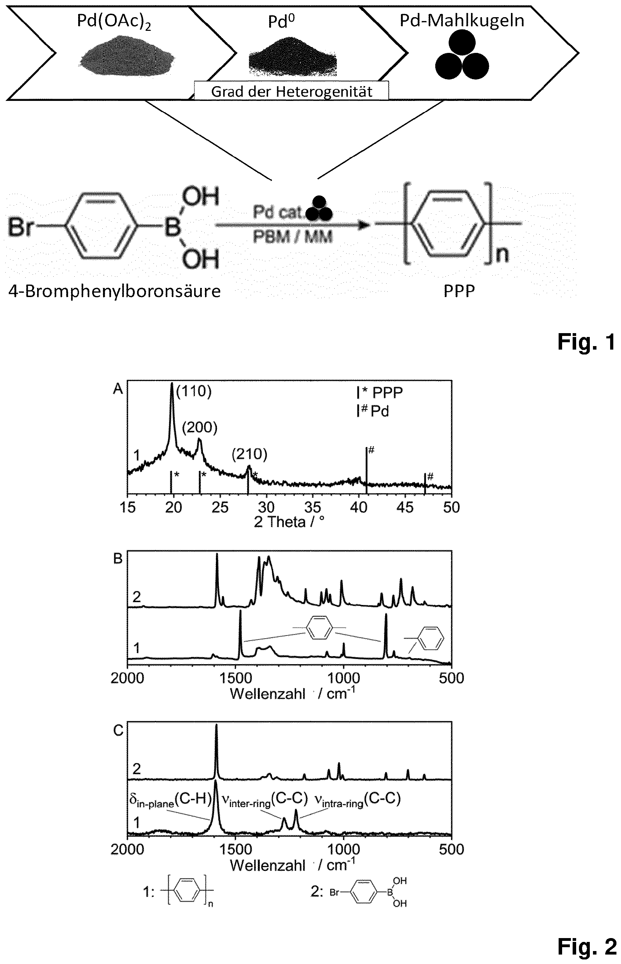

Das resultierende Material (im Folgenden exemplarisch für PPP_{PBM-6}) ist teilkristallin (siehe XRD in **Figur 2A**) und zeigt das charakteristische IR-Spektrum von PPP **(****Figur 2B****).** Dieses Spektrum kann verwendet werden, um den Polymerisationsgrad zu bestimmen, indem das Verhältnis der Peaks bei 690 cm⁻¹ und 805 cm⁻¹ gemäß Aeiyach et al. (Polym. Sci. Part A Polym. Chem. 1989, 27, 515-526 und Geetha et al. (Synth. Met. 2005, 155, 306-310) gemessen wird (für weitere Informationen siehe ESI 1.1). Die Materialien wurden auch mittels Raman-Spektroskopie untersucht, wobei charakteristische Banden bei 1220 cm⁻¹ (Vᵢₙₜᵣₐ-_{Ring}(C-C)), 1280 cm-1 (v_{inter-Ring}(C-C)) und 1600 cm⁻¹ (δᵢₙ Ebene(C-H)) beobachtet werden. Für p Oligophenylen-Oligophenylene (die die gleichen Bänder aufweisen) wird berichtet, dass die Intensitäten von der Kettenlänge abhängen, da diese Korrelation nur für niedrige DPs (max. 8) gilt, war sie für unsere Polymere nicht anwendbar.

### Referenzmaterial 1 - Pd(OAc)₂-Katalysator

Das Referenzmaterial wurde mit einem Pd(OAc)2-Katalysator (PPP_{PBM Ref}) synthetisiert. Dabei wurde nach einer Reaktion von 0,5 h (Mahlzeit) eine Ausbeute von 47% und ein Polymerisationgrad (DP) von 69 gemäß S. Grätz et al. (Green Chem. 2017, 19, 2973-2979) erhalten.

### Referenzmaterial 2 - Pd⁰ als Katalysator

Das Palladiumsalz (Pd(OAc)₂-Katalysator) wurde durch elementares Palladium (Pd⁰) ersetzt. Hierbei wurde festgestellt, dass die Mahlparameter (wie Mahlgut, Mahlzeit und Katalysatormenge) starke Einflüsse auf die Ausbeute und DP der erhaltenen PPP in der katalytischen Umsetzung haben.

Die Proben PPP_{PBM-1}, ₋₂,₋₃,₋₆ wurden mit ZrO₂-, Stahl-, Wolframcarbid- bzw. Si₃N₄-Mahlkugeln gemahlen. Dabei wurde festgestellt, dass je höher die Dichte der Mahlkugeln, desto höher die Ausbeute, aber desto geringer der Polymerisationsgrad (DP) nach einer Mahlzeit von 4 h (Tabelle 2). Dies deutet darauf hin, dass die wachsende kinetische Energie der Mahlkugeln (Eₖᵢₙ = 0,5 mv²) aufgrund der höheren Masse, der Schlagumwandlung, aber auch dafür verantwortlich ist, dass die wachsenden Polymerketten auf einem bestimmten Niveau wieder gebrochen werden.

### Referenzmaterial 3 - Pd⁰ als Katalysator und Austausch der Halogenidfunktion

Danach wurde die Halogenidfunktion (Bromid) des Monomers aufgrund seines bekannten Einflusses in Suzuki-Kupplungen ausgetauscht. Mit Chlorid (PPP_{PBM} 11) wurde kein PPP erzielt, während Jodid (PPP_{PBM} 12) den höchsten DP (79) und eine gute Ausbeute (66%) lieferte. Der beobachtete Trend zur Erhöhung der Reaktivität von Chlorid gegenüber Bromid und Jodid wird durch S. Grätz et al. (Green Chem. 2017, 19, 2973-2979) gestützt.

Die nachfolgenden Experimente wurden mit 4-lodophenylboronsäure als Monomer durchgeführt.

### Beispiel 2 - Palladiumkugeln als Katalysator

Hierin wurden die Mahlkugeln direkt als Katalysatoren eingesetzt. Hierfür wurde das Verfahren auf einer anderen Mahlvorrichtung durchgeführt (da die Verwendung von 22 Palladiummahlkugeln, wie sie in einer Planetenkugelmühle verwendet werden, hierbei nicht möglich sind) und eine Mixerkugelmühle (MM) verwendet.

Als Beweis zeigen wir zunächst, dass zwei Referenzmaterialien, die mit Pd(OAc)2 (PPP_{MM-Ref-1}) bzw. Pd_{schwarz} (PPP_{MM Ref-2}) als Katalysator synthetisiert wurden, mit den Ergebnissen in einer Planetenkugelmühle (PPP_{PBM-Ref} bzw. PPP_{PBM 1}) vergleichbar sind. Allerdings wurde aufgrund der geringeren Energieeinwirkungen dieser Art von Mühle eine längere Mahlzeit benötigt.

Für eine Standardsynthese in der MM wurden 496 mg 4-Iodophenylboronsäure (2,00 mmol) mit 2,504 g (18,12 mmol) K₂CO₃ und zwei Mahlkugeln (10 mm Durchmesser) in einen 25 mL ZrO₂-Mahlbecher gegeben. Das Reaktionsgemisch wurde bei 30 s⁻¹ gemahlen.

Wird nur eine Palladiummahlkugel (3,62 g) verwendet (hier erfolgen nur Mahlkugel/Mahlgefäßwand-Zusammenstöße), ergibt sich eine geringe Ausbeute von 6% und ein hohe DP von 115 (PPP_{MM-1}, siehe Tabelle 2). Dies untermauert den kritischen Faktor der Energieeinwirkung, der zu einer Polymerzerstörung auf einem bestimmten Niveau führt. Das Hinzufügen einer zweiten Mahlkugel (PPP_{MM-2}) erhöht die Anzahl der möglichen reaktiven Kollisionen (d.h. Zusammenstöße zwischen den Mahlkugeln untereinander und zwischen Mahlkugel/Mahlgefäßwand), verringert aber den Energieeintrag durch einen reduzierten freien Weg. Dadurch steigt die Ausbeute (32%) auf ein Niveau, das näher an dem von PPP_{PBM-1} liegt, während der DP von 104 mit dem von einer Palladiummahlkugel vergleichbar ist.

Um den Grad der Heterogenität dieser Reaktion zu verstehen, wurde eine Reaktion gemäß der Probe PPP_{MM-2} nach dem Standardansatz für MM durchgeführt, aber alle 2 Stunden eine Probe von 100 mg aus dem Reaktionsgemisch entnommen. Die Ausbeute war jedoch niedriger (18%) im Vergleich zu PPP_{MM-2}, während der DP (199) aufgrund der langsamer laufenden Reaktion zunahm.

In weiteren Experimenten haben wir der Reaktion mit dem Ziel der Palladiumstabilisierung gängige Komplexierungsliganden wie Triphenylphosphin oder 1,5-Cyclooctadien hinzugefügt. Unerwartet führte dies nicht zu PPP-Material. Wir gehen davon aus, dass die Liganden auf die Oberfläche der Palladiummahlkugeln abgestimmt sind und somit die Katalysatorstellen blockieren, was sie für das Monomer unzugänglich macht. Dies belegt wiederum die heterogene Reaktion an der Oberfläche der Palladiummahlkugeln.

Die Ergebnisse sind in der nachstehenden Tabelle 2 zusammengefasst:

**Tabelle 2: Poly(para-phenylen), erhalten durch mechanochemische Suzuki-Polymerisation in einer Planetenkugelmühle unter Verwendung von Pd(OAc)2 und Pdschwarz als Katalysatoren.**

| | Probennummer | Mahlmaterial | Reaktionzeit [h] | Menge an Katalysator | DP | Polymerausbeute [%]^{[a]} |
|---|---|---|---|---|---|---|
| Referenz Planetenkugelmühle | PPP_{PBM}-Ref | ZrO₂ | 0.5 | 9.3 mol% Pd(OAc)₂ | 69 | 47 |
| Pd_{schwarz/PBM} | PPP_{PBM}-1 | ZrO₂ | 4 | 4.7 mol% Pd black | 18 | 59 |
| | PPP_{PBM}-2 | Steel | 4 | 4.7 mol% Pd black | 13 | 56 |
| | PPP_{PBM}-3 | WC | 4 | 4.7 mol% Pd black | 10 | 81^{[b]} |
| | PPP_{PBM}-4 | Si₃N₄ | 2 | 4.7 mol% Pd black | 34 | 19 |
| | PPP_{PBM}-11 | Si₃N₄ | 4 | 4.7 mol% Pd black | 0 | 0 |
| | PPP_{PBM}-12 | Si₃N₄ | 4 | 4.7 mol% Pd black | 79 | 66 |
| Referenz MM | PPP_{MM}-Ref-1 | ZrO₂ | 8 | 4.7 mol% Pd(OAc)₂ | 50 | 50 |
| | PPP_{MM}-Ref-2 | ZrO₂ | 8 | 4.7 mol% Pd_{schwarz} | 52 | 6 |
| Pd-Mahlkugeln/MM | PPP_{MM}-1 | ZrO₂/Pd | 8 | 1 Pd-Mahlkugeln | 115 | 6 |
| | PPP_{MM}-2 | ZrO₂/Pd | 8 | 2 Pd-Mahlkugeln | 104 | 32 |

| | | | | | | |
|---|---|---|---|---|---|---|
| [a] Ausbeute berechnet aus der Masse des unlöslichen Polymers nach dem Waschen mit Wasser, 10 Gew.-% HCl, Ethanol und Aceton. | | | | | | |

### Beispiel 3 - Palladium als Katalysator in der Suzuki-Polymerisation

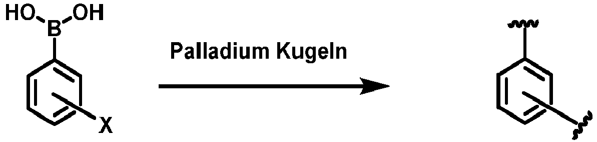

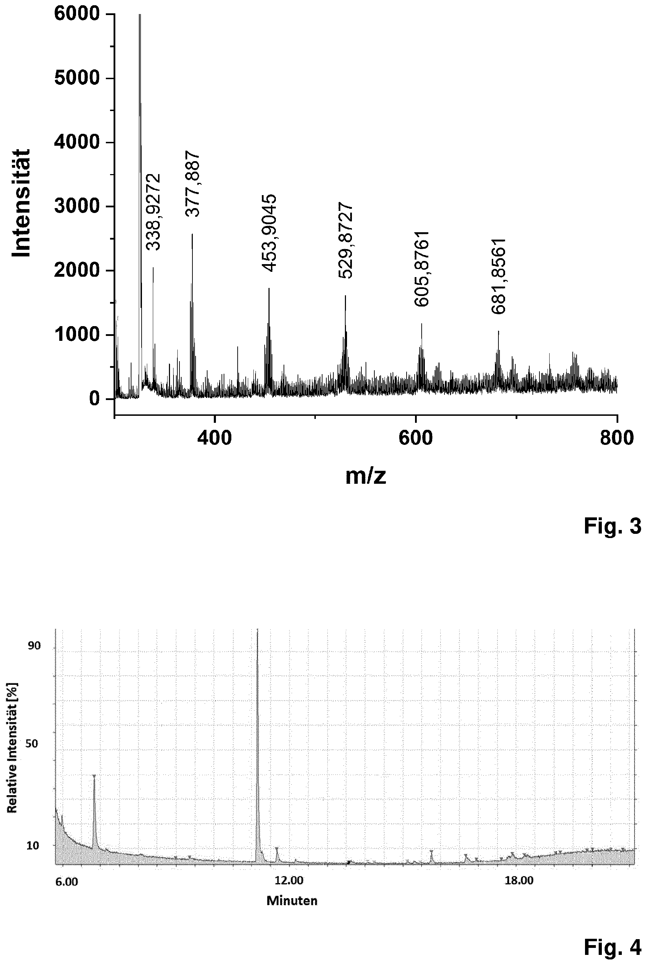

Die Suzuki-Kupplungsreaktion gemäß Ausführungsbeispiel 1, bei der aus 1-Bromo-4-phenylboronsäure ein Polyparaphenylen entsteht, kann auch für sterisch anspruchsvollere Edukte erfolgreich genutzt werden. So eignet sich das Vorgehen dabei ebenso, um 1-Bromo-2-phenylboronsäure zu polymerisieren. Die dabei erhaltenen Ketten sind mit bis zu 10 Wiederholungeinheiten kürzer als die Ketten der Polymerisation der 1-Bromo-4-phenylboronsäure (vgl. **Fig. 3**).

### Beispiel 4 - Nickelkugeln als Katalysator in der Yamamoto-Kupplung

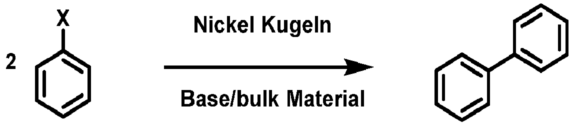

Die der Ullmann Kupplung ähnlichen Yamamoto-Kupplung, bei der zwei Halogenaromaten mittels Nickel verknüpft werden gelang in der Schwingmühle MM-500 (RETSCH GmbH, Haan, Deutschland). Für eine erfolgreiche Umsetzung wurde lodbenzol (flüssig) als Edukt mit einem großen Überschuss KOtBu (8-facher Überschuss als feste zweite Aktivkomponente) mit vier 10-12 mm großen Nickelkugeln in einem 25 ml PMMA Mahlbecher für 2,5 h in einer Schwingmühle vermahlen. Die MM-500 bei einer Mahlfrequenz von 35 Hz erwies sich dabei als die beste Mühle. Zudem konnten auch Umsetzungen in der IST-500 oder der MM-400 bei einer Mahlfrequenz von je 30 Hz erzielt werden. Die MM-500 lieferte Umsätze von bis zu 63% (vgl. **Fig. 4**).

### Beispiel 5 - Nickelkugeln als Katalysator in der Sonogashira-Hagihara-Kupplung

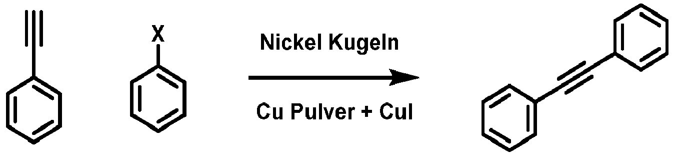

Die Sonogashira-Hagihara-Kupplung, die üblicherweise durch Palladium katalysiert wird gelang unter direkt mechanokatalytischen Bedingungen. Für eine erfolgreiche Umsetzung wurde eine Alkinspezies (zumeist Phenylacetylen (flüssig), seltener Biphenylacetylen (fest) oder 1,1-Diphenylprop-2-yn-1-ol (fest)), mit einer halogenaromatischen Verbindung (zumeist lodbezol (flüssig), aber auch Chlornaphthalin (flüssig), Brombenzol (flüssig), 4-Bromo-N,N-dimethylanilin (fest) oder 6-Methoxy-bromonaphthalin (fest)) mittels Nickel-Kugeln, KupferPulver und 5 mol-% Kupferiodid (fest) umgesetzt. Als Base und gleichzeitig als Bulk-Material wurden verschiedene Mineralbasen verwendet. Am effektivsten erwiesen sich KOtBu, KOH und K₂CO₃, jedoch können auch NaOH, Cs₂CO₃ und andere Hydroxide bzw. Carbonate als zweite Aktivkomponente benutzt werden. Während dieser Untersuchungen wurden nicht nur reine Nickel-Kugeln, sondern auch Legierungen, wie Nickel-Kupfer-Legierungen (K-400 und K-500) erfolgreich eingesetzt.

### Beispiel 6 - Kupferhaltiger Katalysator in der Glaser-Kupplung

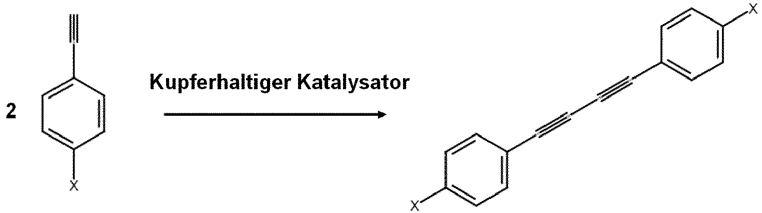

Die Glaser-Kupplung eignet sich dazu, zwei terminale Alkine zu kuppeln, wobei X Wasserstoff (H), Brom (Br) oder eine Phenylgruppe ist. Die Reaktionen mit Phenylacetylen (flüssig), 4-Bromphenylacetylen (fest) oder Biphenylacetylen (fest) konnten erfolgreich in einer MM-400 bei 30 Hz durchgeführt werden. Bei der mechanochemischen Umsetzung der Edukte erfolgt eine Kupplung innerhalb von 90 min. Zu einer erfolgreichen Reaktion führen der Einsatz eines kupferhaltigen Bechers (Aluminiumbronze (CuAl10Ni5Fe4), Zinnbronze (CuSn8), Messing (CuZn36), Kupfer) unter Verwendung einer inerten ZrO₂-Kugel als Mahlkugel, sowie der Einsatz eines kupferhaltigen Mahlbechers und einer kupferhaltigen Kugel. Als Bulkmaterial wurde K₂CO₃ verwendet. Gleichwohl führt auch der Einsatz anderer Mineralbasen zum gewünschten Zielprodukt, wobei die Glaser-Kupplung auch in anderen Reaktionen erfolgreich beobachtet werden konnte, wo bspw. Hydroxide eingesetzt wurden. Unter Verwendung der vorgenannten Legierungen als katalytisch aktives Material wurden Ausbeuten von 68% (mit einer Bronzekugel) bis zu 88% (unter Verwendung einer inerten ZrO₂-Kugel) erzielt. Wie aus der nachfolgenden Tabelle hervorgeht, verringert sich der Materialabrieb der eingesetzten Mahlkugeln drastisch auf 8,0 mg (0,1%) und weiter auf 2,0 mg (0,02%), wenn anstelle von reinem Kupfer als katalytisch aktives Material Messing bzw. Bronze eingesetzt wird. Gleichwohl kann die Ausbeute erhöht werden.

**Tabelle 3: Direkte mechanokatalytische Glaserkopplung mit 2 mmol Phenylacetylen, zwei Mahlkugeln und K₂CO₃ als Base; 90 Minuten Reaktionszeit mit O₂ im Unterschuss.**

| **Nr.** | **Kugelmaterial** | **Gewicht pro Kugel [g]** | **Mahlzeit [min]** | **Gesamt-Abrieb der Kugeln [mg]** | **Ausbeute [%]** |
|---|---|---|---|---|---|
| Ref.M | ZrO₂ | 3,19 | 90 | 0,4 | - |
| 1 | Kupfer | 4,08 | 90 | 191,5 | 20 |
| 2 | Messing (CuZn36) | 4,42 | 90 | 8,0 | 20 |
| 3 | Bronze (CuSn8) | 4,04 | 90 | 2,0 | 19 |
| 4 | Monel | 3,82 | 90 | 15,6 | 17 |

| | | | | | |
|---|---|---|---|---|---|
| [a] 6.4 mg (5 mol%) Kupferpulver wurden als Katalysator zugesetzt und ohne O₂-Eintrag. | | | | | |

Bei der chemischen Umsetzung der vorgenannten Edukte in einem Kupfer-Becher (1) und einem Bronze-Becher (2) als katalytisch aktives Material unter Verwendung einer inerten ZrO₂-Kugel wurden für (1) lediglich Ausbeuten in Höhe von 4% ermittelt, wohingegen bei der Umsetzung nach (2) 60% Ausbeute erzielt werden konnten. Zugleich verringert sich der Materialabrieb von 243,0 mg bei Verwendung des Kupfer-Bechers auf 5,0 mg bei Verwendung eines Bronze-Bechers.

## Patentansprüche

1. **Mechanochemisches Verfahren** zum direkten heterogenen Katalysieren einer chemischen Reaktion, umfassend die folgenden Schritte:
a) Bereitstellen zumindest eines Edukts;
b) Bereitstellen eines Formkörpers, wobei der Formkörper zumindest ein katalytisch aktives Material umfasst; und
c) direktes mechanochemisches Umsetzen des zumindest einen Edukts zu einem Produkt durch energieübertragendes Inkontaktbringen dieser mit dem Formkörper;
**dadurch gekennzeichnet, dass**
der Feststoffanteil in der heterogen katalysierten chemischen Reaktion mehr als 30 Gew.-% beträgt, und
wobei das katalytisch aktive Material ein Kompressionsmodul von zumindest 160 GPa und eine Mohshärte von zumindest 3,0 aufweist.

2. Verfahren nach Anspruch 1, wobei zumindest eines der Edukte in der heterogen katalysierten chemischen Reaktion als Feststoff eingesetzt wird.

3. Verfahren nach Anspruch 1 oder 2, wobei das katalytisch aktive Material ein Metall aus der Gruppe bestehend aus einem Metall der Gruppen 6 bis 10 des Periodensystems, vorzugsweise Ru, Rh, Ni, Pd, Pt, Fe, Co, Au oder ein Gemisch daraus umfasst.

4. Verfahren nach einem der Ansprüche 1 bis 3, wobei der Formkörper als Komponente einer Kugelmühle, einer Exzenterschwingmühle, einer Rotorschlagmühle, einer Stiftmühle oder eines Extruders ausgebildet sein.

5. Verfahren nach einem der Ansprüche 1 bis 4, wobei der chemischen Reaktion eine feste zweite Aktivkomponente so zugesetzt ist, dass der Gesamtanteil an Feststoffen aller an der chemischen Reaktion beteiligten Komponenten mehr als 30 Gew.-% beträgt.

6. Verfahren nach einem der Ansprüche 1 bis 5, wobei der chemischen Reaktion ein inerter Feststoff so zugesetzt ist, dass der Gesamtanteil an Feststoffen aller an der chemischen Reaktion beteiligten Komponenten mehr als 30 Gew.-% beträgt.

7. Verfahren nach einem der Ansprüche 1 bis 6, wobei das Verfahren zum direkten heterogenen Katalysieren einer chemischen Reaktion als Festphasenreaktion durchgeführt wird.

8. Verfahren nach einem der Ansprüche 1 bis 7, wobei der chemischen Reaktion eine Flüssigkeit mit einer Menge im Bereich zwischen 0 und 1 µl Flüssigkeit pro mg bemessen an allen Komponenten der chemischen Reaktion zugesetzt ist.

9. Verfahren nach einem der Ansprüche 1 bis 8, wobei das energieübertragende Inkontaktbringen der Edukte mit dem Formkörper gemäß Schritt (c) wiederholt über einen Zeitraum von zumindest 5 Minuten erfolgt.

10. Verfahren nach einem der Ansprüche 1 bis 9, wobei das katalytisch aktive Material zumindest teilweise auf der Oberfläche des Formkörpers als Schicht ausgebildet ist.

11. Verfahren nach einem der Ansprüche 1 bis 10, wobei der Formkörper aus dem katalytisch aktiven Material besteht.

12. Verfahren nach einem der Ansprüche 1 bis 11, wobei der Formkörper ein Mahlreaktor und/oder eine Mahlkugel ist.

13. Verfahren nach einem der Ansprüche 1 bis 12, wobei die heterogen katalysierte chemische Reaktion eine Hydroformylierung, Hydrierung, Isomerisierung, Reduktion, Dehydrierungsreaktion, Olefinmethathese, Hydroformylierung, Arylaminierung, Hydrosilylierung, Kreuzkupplungsreaktion, Olefindimerisierung, Olefinoligomerisierung, Cyclopropanierung, Reduktion von Halogenarenen, Polymerisation, Polymerisation oder Telomerisationsreaktionen ist.

14. **Formkörper** zum direkten heterogenen Katalysieren einer chemischen Reaktion wie in einem der vorhergehenden Ansprüche definiert, umfassend ein katalytisch aktives Material, wobei das katalytisch aktive Material ein Metall aus der Gruppe bestehend aus Ru, Rh, Ni, Pd, Pt, Co, Au, ein Gemisch daraus oder eine Legierung basierend auf einem Metall aus der Gruppe bestehend aus einem Metall der Gruppen 6 bis 10 des Periodensystems, vorzugsweise Ru, Rh, Ni, Pd, Pt, Co, Au, Cu, **dadurch gekennzeichnet, dass** das katalytisch aktive Material keine Makro- oder Mesoporen aufweist.

15. **Verwendung eines Formkörpers** nach Anspruch 14 als heterogenen Katalysator in einem Verfahren zum direkten heterogenen Katalysieren einer chemischen Reaktion gemäß einem der Ansprüche 1 bis 12.
